# DEMANDE DE BREVET EUROPEEN

(11) **EP 0 895 908 A1**
(43) Date de publication de la demande: **10.02.1999**
(21) Numéro de dépôt: 98402002.4
(22) Date de dépôt: 06.08.1998
(51) Int. Cl.: B60T 1/00, F16H 63/48

(54) **Dispositif de commande manuelle d'un frein de parcage de vehicule automobile**

(30) Priorité: 07.08.1997 FR 9710125
(71) Demandeur: AUTOMOBILES PEUGEOT, 75116 Paris (FR); AUTOMOBILES CITROEN, 92200 Neuilly-sur-Seine (FR)
(72) Inventeur: Anger, Gérard, 78540 Vernouillet (FR)
(74) Mandataire: Gendraud, Pierre

(57) **Abrégé**

Dans ce dispositif, un levier de manoeuvre (1) est relié à des moyens mécaniques d'immobilisation du véhicule de manière à les placer dans un état actif de blocage quand il est amené à une position dite de parcage (P).

Selon l'invention, le dispositif comporte une butée éclipsable (17) propre à interdire l'accès des moyens d'immobilisation à leur état actif quand la vitesse du véhicule est supérieure à un seuil déterminé.

Application aux véhicules équipés d'une boîte de vitesses automatique et d'un frein de parcage commandés par un même levier.

## Description

L'invention est relative à un dispositif de commande manuelle d'un frein de parcage d'un véhicule automobile.

Elle se rapporte plus précisément aux commandes manuelles de boîte de vitesses automatique de véhicule dans lesquelles un levier de manoeuvre, dit levier de vitesses, est déplaçable suivant un trajet déterminé aboutissant à une position dite de parcage où le levier actionne des moyens mécaniques d'immobilisation du véhicule, notamment pour son stationnement ou parcage.

Ces moyens d'immobilisation comprennent généralement un doigt de blocage engageable dans la denture d'une roue dentée tournant à une vitesse proportionnelle à celle du véhicule. Si le levier de vitesses est amené à sa position de parcage alors que le véhicule roule, l'engagement du doigt dans la denture tournant risque de provoquer une détérioration des moyens d'immobilisation. Ce risque est habituellement réduit par l'utilisation de moyens d'immobilisation fortement dimensionnés, en métal très résistant, qui s'avèrent alors lourds et coûteux.

L'invention vise à palier cet inconvénient en n'autorisant l'actionnement des moyens d'immobilisation du véhicule que si celui-ci est arrêté ou roule à vitesse extrêmement basse.

A cet effet, l'invention concerne un dispositif de commande d'un frein de parcage du type susmentionné, à levier de manoeuvre relié à des moyens mécaniques d'immobilisation du véhicule de manière à les placer dans un état actif de blocage quand il est amené à une position dite de parcage, caractérisé en ce qu'il comporte une butée éclipsable propre à interdire l'accès des moyens d'immobilisation à leur état actif quand la vitesse du véhicule est supérieure à un seuil déterminé.

Suivant quelques dispositions intéressantes de l'invention :
- la butée éclipsable est actionnable électriquement par une unité de commande reliée à un capteur de vitesse du véhicule ;
- la butée éclipsable est propre à coopérer avec le levier ou avec un bras solidaire en rotation du levier ;
- la butée éclipsable est propre à coopérer avec un élément des moyens d'immobilisation, cet élément étant éventuellement relié au levier par un moyen élastique d'armement ;
- la butée est propre à interdire la libération des moyens d'immobilisation tant qu'une pédale de frein du véhicule n'est pas actionnée ; dans ce cas :
- cette interdiction est obtenue par coopération de la butée avec une face d'appui délimitant une ouverture du doigt ou du bras précités ;
- l'unité de commande est reliée à des capteurs de positions respectives du levier et de la pédale de frein.

Deux modes de réalisation du dispositif selon l'invention sont décrits ci-après, avec référence aux dessins annexés parmi lesquels :
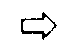 la figure 1 est une vue simplifiée en élévation et en coupe partielle d'une partie du dispositif, côté levier de manoeuvre, selon un premier mode de réalisation ;
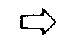 la figure 2 est une vue de dessus de la partie du dispositif de la figure 1, avec un schéma synoptique de commande électrique du dispositif ;
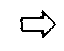 la figure 3 est une vue partielle en coupe suivant la ligne III - III de la figure 1 ;
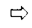 la figure 4 est une vue en coupe partielle d'une partie du dispositif, côté moyens d'immobilisation, selon un second mode de réalisation ;
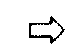 la figure 5 est une vue partielle simplifiée en coupe suivant la ligne V - V de la figure 4.

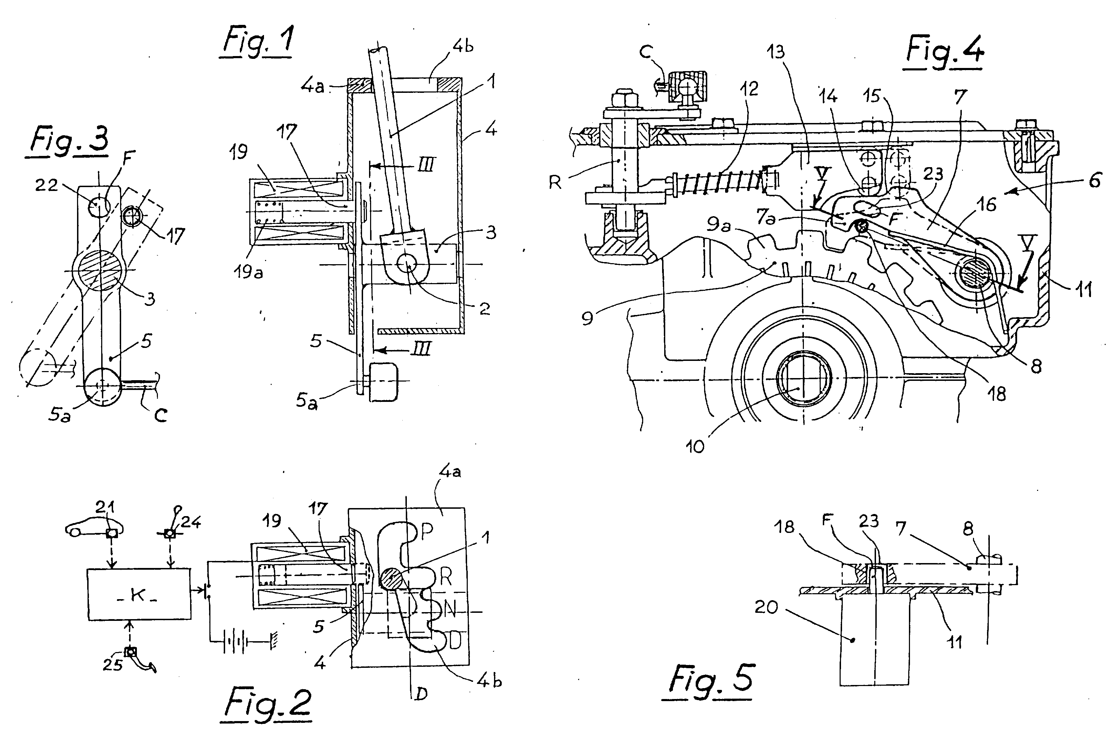

On voit à la figure 1 un levier de manoeuvre ou levier de vitesses 1 pouvant pivoter sur deux axes perpendiculaires 2 et 3 portés par un boîtier 4 fixé, de façon usuelle non représentée, à la caisse d'un véhicule. Le levier traverse une paroi 4a du boîtier par une ouverture dite grille 4b qui guide ses trajets passant par diverses positions ici repérées P,R,N,D, dont l'une P est en bout de la grille.

Le levier 1 est solidaire en rotation, par l'intermédiaire des axes 2 et 3, d'un bras 5 qui est propre à pivoter comme lui en direction longitudinale D autour de l'axe 3 et dont une extrémité libre 5a est reliée, par exemple par un câble de commande C, à des moyens d'immobilisation 6 du véhicule tels que ceux visibles à la figure 4.

Ces moyens d'immobilisation 6, reliés au câble C par un pivot de renvoi R, comportent un doigt mobile 7 pivotant sur un axe 8 et engageable par son extrémité 7a dans la denture 9a d'une roue dentée 9 tournant sur un axe 10 porté, comme l'axe 8, par un carter 11 tel que celui d'une boîte de vitesses du véhicule. La roue 9 est reliée positivement à un arbre de transmission du véhicule de manière à tourner à une vitesse proportionnelle à celle du véhicule et à immobiliser celui-ci quand elle est bloquée par engagement de l'extrémité 7a du doigt 7 dans la denture 9a.

Le pivot de renvoi R est relié d'une part au bras 5 par le câble C et d'autre part au doigt 7 par l'intermédiaire d'un ressort d'armement 12 et d'un mécanisme connu à coulisseau 13 avec galet 14 roulant sur une rampe 15 du doigt poussé par un ressort de rappel 16, de façon que lorsque le levier 1 est amené à sa position terminale P, l'extrémité 7a du doigt s'engage dans la denture 9a, ou soit prête à s'y engager dès qu'un intervalle entre deux dents de la denture se présente devant cette extrémité 7a.

Pour éviter que cet engagement s'effectue lorsque la roue dentée tourne à une vitesse telle qu'il pourrait en résulter une détérioration de la denture, du doigt, et/ou de pièces associées, le dispositif de commande comporte, selon l'invention, une butée éclipsable 17 ou 18 propre à interdire le passage des moyens d'immobilisation 6 à leur état actif de blocage de la roue dentée 9 par le doigt mobile 7 tant que la vitesse du véhicule est supérieure à un seuil déterminé, par exemple compris entre 1 et 2 km/h.

Cette butée est à cet effet propre à coopérer, selon le mode de réalisation des figures 1 à 3 (butée 17), avec le bras 5, ou bien, selon le mode de réalisation des figures 4 et 5 (butée 18) avec le doigt de blocage 7, ou encore, selon une variante non représentée, directement avec la tige du levier 1.

Cette butée est ici constituée par une extrémité d'un noyau coulissant d'un électro-aimant 19 ou 20 propre à être excité par l'intermédiaire d'une unité de commande électrique K reliée à un capteur 21 de la vitesse du véhicule ou d'un élément tournant en liaison positive avec la roue dentée 9.

Selon le mode des figures 1 à 3, quand le véhicule roule, l'électro-aimant 19 est au repos, et son noyau 17 (en traits pleins à la figure 1 et en traits pointillés à la figure 2), poussé vers l'extérieur par un ressort 19a, empêche le passage du bras 5, donc du levier 1 vers la position de parcage P ; et quand la vitesse du véhicule est inférieure au seuil déterminé, le capteur adresse à l'unité de commande K un signal qui provoque l'excitation de l'électro-aimant 19, dont le noyau s'éclipse alors, laissant passer le bras 5 (comme indiqué en traits mixtes à la figure 3), donc le levier 1 vers la position de parcage P, et entraînant le doigt de blocage 7 vers son état actif d'engagement dans la denture 9a.

Selon le mode des figures 4 et 5, quand la vitesse du véhicule est supérieure au seuil déterminé, le noyau 18 de l'électro-aimant 20 empêche le passage du doigt 7 vers sa position de blocage représentée en traits interrompus, mais grâce au système d'armement à ressort 12 le levier de vitesses 1 peut être amené à sa position P de la grille, et le blocage de la roue dentée n'est effectué ultérieurement, par détente de ce ressort, que lorsque la butée 18 s'éclipse par excitation de l'électro-aimant 20 dès que la vitesse du véhicule est inférieure au seuil déterminé.

Le bras 5 ou le doigt 7 peut en outre comporter, sur son contour ou dans une ouverture appropriée 22 ou 23, une face d'appui F pour la butée 17 ou 18 en position saillante c'est-à-dire non éclipsée, de manière à interdire la libération des moyens d'immobilisation 6, c'est-à-dire leur passage de la position active de blocage à leur position de dégagement du doigt 7, tant qu'une condition requise n'est pas respectée, et notamment, si le levier 1 est celui d'une commande d'une boîte de vitesses automatique, tant que la pédale de frein du véhicule n'est pas actionnée. A cet effet, l'unité de commande K est alors reliée à des capteurs 24 et 25 de positions respectives du levier de vitesses et de la pédale de frein, et programmée de façon à exciter l'electro-aimant 19 ou 20, donc à éclipser la butée, quand elle reçoit simultanément de ces capteurs des signaux de présence du levier 1 à la position P et d'actionnement de la pédale de frein.

Ainsi le dispositif selon l'invention permet, au moyen d'une seule butée éclipsable et d'une seule unité de commande électrique, de réduire les risques de détérioration d'un frein de parcage, et de respecter des conditions de démarrage d'un véhicule à boîte de vitesses automatique.

## Revendications

1. Dispositif de commande d'un frein de parcage de véhicule automobile, comportant un levier de manoeuvre (1) relié à des moyens mécaniques d'immobilisation (6) du véhicule de manière à les placer dans un état actif de blocage quand il est amené à une position dite de parcage (P),
caractérisé en ce qu'il comporte une butée éclipsable (17;18) propre à interdire l'accès des moyens d'immobilisation (6) à leur état actif quand la vitesse du véhicule est supérieure à un seuil déterminé.

2. Dispositif selon la revendication 1,
caractérisé en ce que la butée éclipsable (17;18) est actionnable électriquement par une unité de commande (K) reliée à un capteur (21) de vitesse du véhicule.

3. Dispositif selon l'une des revendications 1 ou 2,
caractérisé en ce que la butée éclipsable (17) est propre à coopérer avec le levier (1) ou avec un bras (5) solidaire en rotation du levier (1).

4. Dispositif selon l'une des revendications 1 ou 2,
caractérisé en ce que la butée éclipsable (18) est propre à coopérer avec un élément (7) des moyens d'immobilisation (6), cet élément étant éventuellement relié au levier (1) par un moyen élastique d'armement (12).

5. Dispositif selon l'une quelconque des revendications précédentes,
caractérisé en ce que la butée (17;18) est propre à interdire la libération des moyens d'immobilisation (6) tant qu'une pédale de frein du véhicule n'est pas actionnée.

6. Dispositif selon la revendication 5,
caractérisé en ce que l'interdiction de libération des moyens d'immobilisation (6) est obtenue par coopération de la butée (17;18) avec une face d'appui (F) délimitant une ouverture (22;23) du bras (5) ou du doigt (7) précités.

7. Dispositif selon l'une des revendication 5 et 6 associée à la revendication 2,
caractérisé en ce que l'unité de commande (K) est reliée à des capteurs (24;25) de positions respectives du levier (1) et de la pédale de frein.
